# EUROPÄISCHE PATENTSCHRIFT

(11) **EP 1 625 415 B1**
(45) Veröffentlichungstag und Bekanntmachung des Hinweises auf die Patenterteilung: **22.02.2012**
(21) Anmeldenummer: 04729597.7
(22) Anmeldetag: 27.04.2004
(51) Int. Cl.: G01S 5/14, G06F 17/00

(54) **STEUERUNGSVERFAHREN AUF BASIS VON FALL BASIERTEN TRACKINGVORHERSAGEN**
METHOD FOR CONTROLLING ON THE BASIS OF CASE BASED TRACKING FORECASTS
PROCEDE DE COMMANDE SUR LA BASE DE PREVISIONS DE SUIVI BASEES SUR DES CAS

(30) Priorität: 14.05.2003 DE 10321561
(43) Veröffentlichungstag der Anmeldung: 15.02.2006
(73) Patentinhaber: Deutsche Telekom AG, 53113 Bonn (DE)
(72) Erfinder: LEIBER, Thomas, 69198 Schriesheim (DE)
(74) Vertreter: Kewitz, Ansgar
(86) Internationale Anmeldenummer: PCT/DE2004/000874
(87) Internationale Veröffentlichungsnummer: WO 2004/104622

(56) Entgegenhaltungen:
- EP-A- 0 697 686
- EP-A- 1 081 620
- WO-A-03/029053
- DE-A- 10 149 285
- DE-A- 19 849 194
- GB-A- 2 363 943
- US-A- 5 642 303
- US-A- 5 919 246
- US-B1- 6 259 381
- US-B2- 6 392 548
- MARMASSE N ED - WILLIAMS M G ET AL: "comMotion: a context-aware communication system" CHI '99 CONFERENCE PROCEEDINGS HUMAN FACTORS IN COMPUTING SYSTEMS. PITTSBURGH, PA, MAY 15 - 20, 1999, CHI CONFERENCE PROCEEDINGS. HUMAN FACTORS IN COMPUTING SYSTEMS, NEW YORK, NY : ACM, US, 15. Mai 1999 (1999-05-15), Seiten 1-2, XP002226460 ISBN: 0-201-48559-1

## Beschreibung

Die Erfindung betrifft im Wesentlichen ein Verfahren zur Steuerung von digital ablegbaren Ereignissen auf einem über das Internet zugängigen Computersystem. Insbesondere sind die Ereignisse von einem Benutzer vorgebbar und in Abhängigkeit von Bewegungsinformationen des Benutzers, die durch ein mobiles Endgerät übermittelt werden, steuerbar.

### Gebiet der Erfindung:

Durch die verstärkte Verwendung von mobilen Endgeräten kann ein Benutzer, der ein solches Gerät mit sich führt, jederzeit lokalisiert werden. Es gibt bereits eine Vielzahl von Erfindungen, die diese Informationen verwenden, um dem Benutzer Informationen zukommen zu lassen.

Aufgabe der Erfindung ist es, ein verfeinertes Verfahren bereitzustellen, das es dem Benutzer ermöglicht, eigenständig zu bestimmen, welche Informationen er benötigt, wobei eine vorausschauende Betrachtung von Vorteil ist.

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet.

### Kurzbeschreibung:

### Stand der Technik:

EP1081620A2 beschreibt ein Gerät, welches Informationen bedarfsgerecht und ortsabhängig an einen Benutzer weitergibt. Hier werden vom Benutzer definierte Informationsanfragen in einem Informationsspeicher abgelegt. In einem weiteren Speicher werden ortsabhängige Informationen gespeichert. Die aktuelle Position des Benutzers wird ermittelt und mit den Positionsdaten der gespeicherten ortsabhängigen Informationen verglichen. Bei Übereinstimmung beider Positionsdaten werden dem Benutzer die jeweiligen positionsrelevanten Informationen zur Verfügung gestellt.

Im Einzelnen beschreibt die Erfindung, wie das Bewegungsverhalten von Benutzern aufgezeichnet und für eine spätere Nutzung verwendbar gemacht werden kann. Dabei werden verschiedene Möglichkeiten zur Gewinnung geografischer Lokalisationsdaten vorgestellt. Die so gesammelten Daten werden in bestimmten Bewegungsfällen abgelegt, um später, insbesondere auf der Grundlage von statistischen Erfahrungswerten, den weiteren Programmablauf zu steuern.

Die Aufzeichnung von Bewegungsfällen kann dabei nicht nur auf natürliche Personen abzielen, sondern jede Art von geeignetem Empfänger adressieren. Im Folgenden wird zum besseren Verständnis allerdings der Begriff Benutzer gewählt.

Insbesondere handelt es sich um ein Verfahren zur Steuerung von digital ablegbaren und steuerbaren Ereignissen, die von einem Benutzer vorgegeben wurden. Die Bewegungsinformationen des Benutzers werden durch ein mobiles Endgerät übermittelt. Das Verfahren umfasst folgende Schritte: In einem ersten Schritt werden Streckeninformationen aufgezeichnet und benutzerbezogen abgelegt. In einer einfachen Ausführung werden nur der Startpunkt und der Endpunkt gespeichert, wobei in der bevorzugten Ausführungsform zusätzlich die Uhrzeiten und die Häufigkeit digital gespeichert werden. Ferner werden Zwischenpunkte gespeichert, aus denen sich ein grober Streckenverlauf ablesen lässt. Die Anzahl der zwischenpunkte wird durch das Tracking-Intervall bestimmt. In einem nächsten Schritt werden durch den Benutzer einer oder mehreren Streckeninformationen Ereignisse zugeordnet, die digital gesteuerte Prozesse bestimmen. Hierdurch ist es möglich, dass der Benutzer Einfluss auf das Ereignis und den dadurch gestatteten Prozess hat. Mögliche Reaktionen sind z. B., dass beim Vorliegen eines Staus auf der befahrenen Strecke eine entsprechende Nachricht oder ein Anruf gesteuert werden soll, indem eine alternative Route vorgeschlagen wird. Damit ein solches Ereignis ausgelöst werden kann, wird in einem weiteren Schritt frühzeitig anhand der bestimmten

Streckeninformationen, insbesondere durch statistische Verfahren, bestimmt, welchen Weg der Benutzer eingeschlagen hat. Nachdem eine Bestimmung erfolgt ist, wird überprüft, ob ein Ereignis für diese Strecke hinterlegt ist. Sollte ein solches Ereignis definiert worden sein, so wird der mit dem Ereignis verknüpfte digitale Prozess gestartet. Es wird darauf hingewiesen, dass die statistische Auswertung ebenfalls einen Einfluss auf die Länge der Lokalisierungsintervalle hat. Sollte ein Weg gewählt worden sein, der bereits des Öfteren abgefahren wurde, so ist das Intervall für die Lokalisierung länger zu schalten. Sollte hingegen ein neuer, und nicht bekannter Weg angetreten worden sein, so sind diese Intervalle kleiner, um zuverlässige Informationen für zukünftige statistische Berechnungen zu sammeln.

In der aktuellen Ausführungsform werden die vom mobilen Endgerät über GPS ermittelten Lokalisationsinformationen an das Computersystem übermittelt oder das mobile Endgerät wird anhand von Geokoordinaten von Basisstationen lokalisiert, die dann die Übertragung vornehmen.

Als ein kleiner Umfang von möglichen Prozessen können folgende Aktionen betrachtet werden: Auslösen von Anrufen, MMS, SMS, E-Mails, wobei Informationen, wie analysierte Pxoduktinformationen, die in Streckennähe angeboten werden, Wegoptimierungen oder Staumeldungen übertragen werden können.

Eine weitere Alternative stellt das Starten von benutzerdefinierten Programmen dar, die ggf. vom Benutzer selbstständig erstellt wurden und die z. B. ein Klimasystem am Zielort oder am Startort steuern oder ein Telefonsystem, insbesondere Rufumleitungen oder Anrufbeantworter oder ein Haussicherheitssystem steuern. Es wird darauf hingewiesen, dass es sich hierbei nicht um eine vollständige Aufzählung aller Möglichkeiten handelt.

In einer bevorzugten Ausführungsform können die Streckeninformationen auch manuell eingegeben werden, sodass, bevorzugt durch ein Web-Interface, der Benutzer die Möglichkeit hat, Routen vorzugeben. In der Regel wird jedoch die automatische Überwachung und Registrierung zu bevorzugen sein.

Weiterhin besteht die Möglichkeit, Benutzereingaben für Ereignisse oder der Lokalisierungssteuerung oder der Streckeninformationen über ein Web/WAP-Interface zu steuern.

Zur vereinfachten Datenverwaltung werden die Informationen in Datenbanken abgelegt. Um auf die so abgelegten Informationen einen möglichst schnellen Zugriff zu bekommen, müssen eindeutige Identifikationsmerkmale verwendet werden. Ein Merkmal, das eindeutig ist, ist z. B. die mobile Telefonnummer als ID für die Benutzerinformationen.

Ein weiterer Bestandteil der vorliegenden Erfindung ist ein Computersystem mit einer Einrichtung, die den Ablauf eines Verfahrens nach einem oder mehreren der Verfahrensansprüche erlaubt. Dieses System besteht im Wesentlichen aus drei Komponenten. Einerseits dem Speichersystem zur Ablage von Benutzerdaten. Andererseits dem Speichersystem zur Speicherung von Streckeninformationen. Hierbei kann ein Speichersystem für alle Streckeninformationen verwendet werden, da oftmals eine Überschneidung der Strecken von mehreren Benutzern durch das vorgegebene Straßennetz erfolgt. Eine Referenzierung der Strecken mit Start und Endpunkten erlaubt somit eine ziemlich exakte Bestimmung der Strecken, ohne zu große Datenmengen verwalten zu müssen. Ein weiterer Bereich dient zur Speicherung der Ereignisse und der den Ereignissen zugeordneten Prozesse. In einer bevorzugten Ausführungsform wird dem Benutzer eine vielzahl von Standard-Prozessen bereitgestellt, die individuell zu parametrisieren sind. Somit verringert sich auch in diesem Falle der Bedarf an Datenspeicher. Es ist jedoch auch denkbar, dass der Benutzer eigene Programme, insbesondere Skripts (Perl, PHP) definiert, die ausgeführt werden, wenn das Ereignis eintrifft.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1: eine schematische Darstellung der Bestimmung der Lokalisierungsinformationen, wobei die Mobilfunksysteme, insbesondere die Basisstationen, verwendet werden, um die Position zu bestimmen;
- Fig. 2: eine alternative Ausführung zur Bestimmung der Position eines Endgerätes, die dadurch gekennzeichnet ist, dass der Benutzer auf seinem Endgerät ein Programm laufen lässt, das die Position übermittelt;
- Fig. 3: eine abstrakte Darstellung des Aufbaus des Servers, der die Informationen bereitstellt, die benötigt werden, um das erfindungsgemäße Verfahren durchzuführen;
- Fig. 4: ein Beispiel eines Bewegungsfalles, wobei nur der Startpunkt und der Zielpunkt aufgezeichnet werden;
- Fig. 5: ein alternatives Beispiel eines Bewegungsfalles, wobei zusätzlich Zwischenpunkte aufgezeichnet werden.

Im Rahmen der Erfindung sind zahlreiche Abwandlungen und Weiterbildungen der beschriebenen Ausführungsbeispiele verwirklichbar.

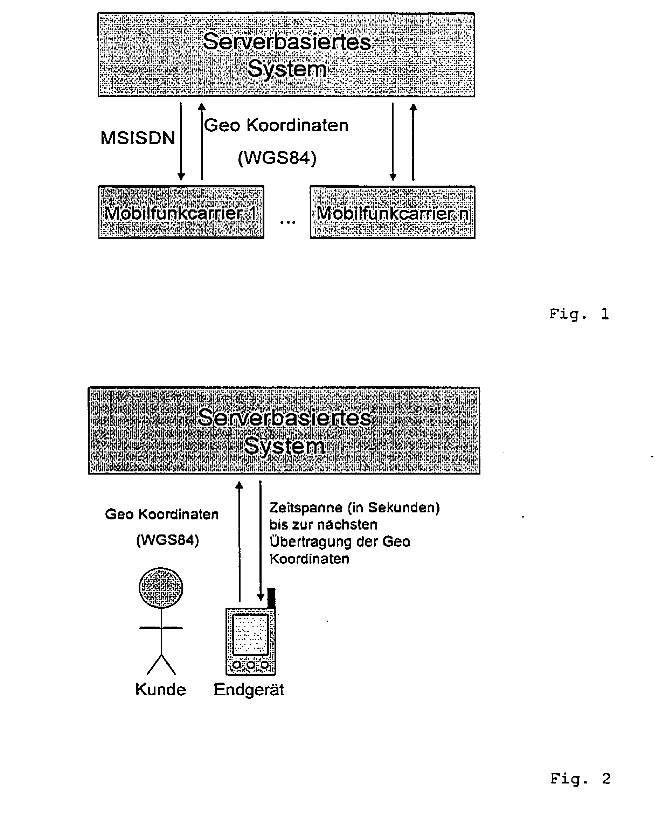

Ausgehend von Figur 1 ist ein Benutzer bei einem mit einer erfindungsgemäßen Funktion ausgestatteten serverbasierten System registriert und hat sich damit einverstanden erklärt, dass seine Position (Geokoordinaten) in unregelmäßigen Abständen ermittelt und gespeichert wird. Außerdem ist er im Besitz eines mobilen Endgerätes, welches sich entweder zur Ortung mittels eines serverbasierten Systems eignet (Mobiltelefon, Smartphone, MDA etc.) oder er besitzt ein Endgerät, das in der Lage ist, selbstständig Zell- oder Geokoordinaten an einen Server zu senden. Letztere müssen eine speziell angepasste Applikation installiert haben (Figur 2).

Der Benutzer hat in der bevorzugten Ausführungsform jederzeit (auch mobil) die Möglichkeit, sowohl den ständig im Hintergrund laufenden Lokalisierungsprozess zu stoppen, als auch die in Form von Bewegungsfällen gespeicherten Daten zu löschen.

Für die technischen Rahmenbedingungen auf Nutzerseite sind folgende Alternativen denkbar.

Mobiles Endgerät ohne Applikation:

Der Kunde besitzt nur ein Endgerät, das weder GPRS fähig ist noch die Möglichkeit hat, einen (externen) GPS Empfänger anzuschließen. Auch ist es nicht möglich oder nicht gewünscht, eine Applikation auf dem Endgerät zu installieren, die mit dem erfindungsgemäßen System kommuniziert.

Ausgangspunkt für die Lokalisierung in diesem Fall sind die Schnittstellen zu Mobilfunkprovidern, denen die jeweiligen Telefonnummern (MSISDN) übergeben werden und eine Antwort in Form von Geokoordinaten (üblicherweise im WGS84 Format) zurücksenden (Figur 1).

In diesem Fall kann der Kunde das im Hintergrund laufende Geo-Tracking nur beenden, indem er sich über GUI basierte Schnittstellen wie Webportal, WAP-Portal oder VoicePortal verbindet und die dort vorhandenen Möglichkeiten zum Beenden des Dienstes nutzt.

Die Lokalisierung wird in diesem Fall vom Serversystem angestoßen.

### Mobiles Endgerät mit Applikation:

In dieser Ausführungsform, die in Figur 2 dargestellt ist, besitzt der Kunde ein Endgerät, das in der Lage ist, Geokoordinaten an ein serverbasiertes System zu senden. Die Geokoordinaten können dabei sowohl durch das Auslesen des GPRS Headers oder durch einen (externen) GPS Empfänger gewonnen werden. Dazu ist es notwendig, auf dem Endgerät eine kleine Applikation zu installieren, die den selbstständigen Transport der Geokoordinaten zum Serversystem gewährleistet. Wie in Figur 2 gezeigt wird, erhält das Endgerät bzw. die Applikation einen Zeitwert (z. B. einen Integer Wert) zurück, der angibt, wann die nächste Übertragung der aktuellen Geokoordinaten erfolgen soll. Üblicherweise handelt es sich dabei um einen Wert in Sekunden oder Millisekunden.

In diesem Fall hat der Kunde die Möglichkeit, über die auf dem Endgerät installierte Applikation das Geo-Tracking zu beenden, indem er entweder eine GUI basierte Einstellung vornimmt, oder die Applikation beendet.

Die Lokalisierung wird in diesem Fall vom Endgerät bzw. von der auf dem Endgerät installierten Applikation angestoßen.

### Technische Rahmenbedingungen auf Serverseite:

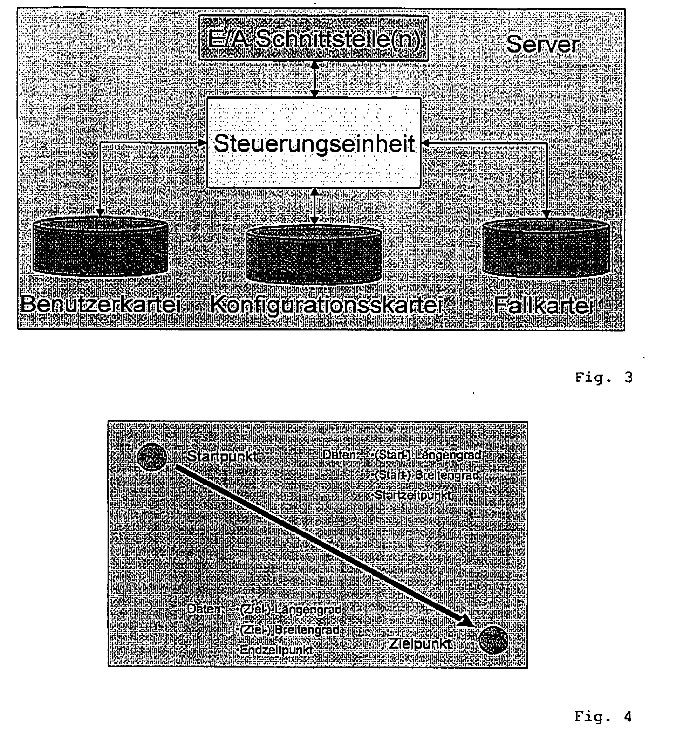

Die technische Ausgestaltung des Servers ist hier sehr allgemein gehalten, da unterschiedliche Ausprägungen und/oder Anforderungen an das Serversystem gestellt werden können. Die im Folgenden beschriebenen Grundkomponenten sind jedoch grundsätzlich vorhanden (siehe Figur 3). Die einzelnen Einträge können dabei sowohl in einer Datenbank als auch im Filesystem abgelegt werden.

Die E/A (Eingabe/Ausgabe) Schnittstellen dienen dazu, mit anderen Systemen oder Applikationen zu interagieren. Dies könnte beispielsweise ein Webserver sein, der das zu steuernde oder zu modifizierende Gesamtsystem für einen Webbrowser aufbereitet und somit einem Benutzer die Möglichkeit bietet, mit dem System zu kommunizieren. Weitere Schnittstellen können Voice- oder WAP- (Wireless Application Protocol) Server sein, die ebenfalls das zu steuernde System in Form einer GUI (Graphical User Interface) dem Benutzer endgeräteabhängig aufbereiten. Um auf Applikationsebene mit anderen Servern oder Endgeräten zu kommunizieren, z. B. zur Übertragung von Geokoordinaten, hat der Server auch diese Schnittstellen angebunden (Application to Application Interfaces). Es existieren auch Schnittstellen zu Gateway's, welche die zu versendenden Nachrichten an die entsprechenden Endgeräte ausliefern.

Im Benutzerbereich sind Daten über alle Benutzer des Systems hinterlegt. Ein wichtiger Eintrag in der Benutzerdatenbank ist die (Mobil-) Telefonnummer, anhand derer der Benutzer bei einer Lokalisierungsab- oder anfrage eindeutig identifiziert werden kann.

In der Falldatenbank sind Bewegungs- und/oder Verhaltensfälle von Benutzern gespeichert. Alle Fälle sind den jeweiligen Benutzern in der Benutzerdatenbank zugeordnet. Falldaten dienen als Entscheidungsunterstützung der Steuereinheit.

In der Konfigurationsdatenbank sind Referenzdaten aller Art gespeichert. Die Referenzdaten bilden die Entscheidungsgrundlage für die Steuereinheit. Referenzdaten sind meistens von Benutzern selbst erstellte Konfigurationen und Einstellungen. Eine Einstellung könnte beispielsweise sein, dass sich ein Benutzer über sein mobiles Endgerät informieren lassen möchte, wenn er sich an einem bestimmten geographischen Ort befindet.

Die Steuereinheit entscheidet, wie die Informationen, die in den drei Karteien gespeichert sind, über die Schnittstellen nach außen hin dargeboten werden. Sie berechnet anhand der vorliegenden Fallinformationen zu einem bestimmten Benutzer Wahrscheinlichkeiten über sein zukünftiges Verhalten und trifft anhand der Konfigurationsdaten Entscheidungen über den weiteren Ablauf.

Bewegungs- oder Verhaltensfälle werden, wie bereits oben beschrieben, in der Falldatenbank abgelegt. In den einzelnen Fällen ist festgehalten, wann sich ein Benutzer in welcher Zeit von einem Startpunkt zu einem Endpunkt bewegt.

Aus den so gewonnenen Grunddaten können weitere Informationen generiert werden, die Verhaltensanalysen erleichtern. Dies können zum Beispiel folgende Informationen sein:
Datum
Wochentag
Bewegungsgeschwindigkeit (Durchschnittsgeschwindigkeit)
Klassifizierungsinformationen (z. B. Regelmäßigkeiten)

Da die Bewegung von Menschen meistens nicht, wie in Figur 4 dargestellt wird, exakt gerade verläuft, können zu jedem Fall auch Unterfälle existieren, die den genauen Bewegungsweg aufzeichnen. Die dabei entstandenen Zwischenpunkte sind die geographischen Orte, an denen sich der Benutzer zum Zeitpunkt einer Lokalisierung befindet.

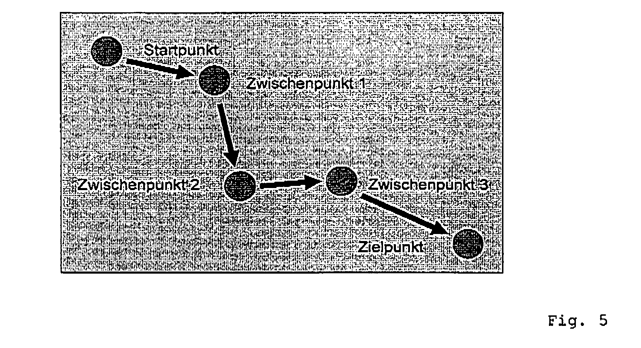

Der in Figur 5 dargestellte weg gliedert sich in vier einzelne Unterfälle, die zu einem "großen" Fall (Figur 4) kumuliert werden.

Die Entscheidung, wann ein Fall gespeichert oder wann der Zielpunkt erreicht ist, wird von der Steuerungseinheit getroffen. Meistens ist der Zielpunkt erreicht, wenn sich der Benutzer über einen bestimmten Zeitraum nicht mehr fortbewegt. Ist der Fall gespeichert, dient er als Erfahrungswert für die Vorhersage zukünftiger Bewegungen.

In der bereits weiter oben erwähnten Steuerungseinheit werden aufgrund der bereits bestehenden oder eben nicht vorhandenen Daten Entscheidungen über den Lokalisierungsverlauf und den weiteren Programmablauf getroffen. Zusätzlich wird die Steuerungseinheit von den Einstellungen des Benutzers beeinflusst.

Ein mögliches Beispiel liegt darin, dass sich ein Benutzer h jeden Tag etwa zur gleichen Uhrzeit von A nach B bewegt. Sobald er seinen Weg von A antritt, wird ein neuer Bewegungsfall angelegt. Die Steuereinheit überprüft die Daten mit bereits vorhandenen Fällen und errechnet, dass der Benutzer mit sehr hoher Wahrscheinlichkeit zu einem bestimmten Zeitpunkt am Ort B eintrifft. Daher können die Lokalisierungsintervalle ziemlich groß sein. Das spart unter anderem Rechenzeit und eventuell anfallende Lokalisiorungsgebühren.

Wenn der Benutzer nun in seinen Konfigurationseinstellungen hinterlegt hat, dass er informiert werden möchte, wenn sich ein Hindernis auf dem Weg von A nach B befindet und dies tatsächlich der Fall ist, wird er also rechtzeitig informiert. Konfigurationseinstellungen können auch in Form von Produktwünschen hinterlegt werden, bei denen eingestellt ist, dass der Benutzer über sein mobiles Endgerät informiert werden möchte, wenn sich ein Produkt, welches die gewünschten Eigenschaften besitzt, auf seinem Weg befindet.

Die Steuereinheit überprüft hierzu die eingestellten Konfigurations- und Falldaten des Benutzers und informiert den Benutzer entsprechend seiner ebenfalls eingestellten Empfangskanäle. Die Steuereinheit ist auch in der Lage, dem Benutzer Handlungsempfehlungen zu übertragen (z. B. Ausweichrouten).

## Patentansprüche

1. Verfahren zur Steuerung von digital speicherbaren Prozessen auf der Basis von Ereignissen, die auf einem über das Internet zugängigen Servercomputersystem in Abhängigkeit von Bewegungsinformationen gestartet werden, wobei die Bewegungsinformationen des Benutzers durch ein mobiles Endgerät bestimmt werden, und an das Servercomputersystem übermittelt werden,
- mit einem Lernschritt, bei dem Streckeninformationen digital benutzerbezogen durch das Servercomputersystem aufgezeichnet werden, wobei der Startpunkt und der Endpunkt gespeichert werden und wobei zusätzlich die Uhrzeiten und eine Anzahl von Zwischenpunkten, die durch ein LokalisierungsIntervall bestimmt werden, digital gespeichert werden,
- mit einem Konfigurationsschritt, bei dem benutzerbezogen einer oder mehreren Streckeninformationen Ereignisse zugeordnet werden, die digital gesteuerte Prozesse bestimmen, wobei die Prozesse vom Benutzer auf dem Servercomputersystem durch Hinterlegung von individuellen Programmen definiert werden;
- mit einem Steuerungsschritt, bei dem frühzeitig anhand der Streckeninformationen bestimmt wird, welche Strecke gefahren wird, um dann das digital gespeicherte Ereignis zu bestimmen und die digitalen Prozesse auf dem Servercomputersystem zu starten.

2. Verfahren nach dem vorhergehenden Anspruch, **dadurch gekennzeichnet, dass** das mobile Endgerät über GPS Lokalisationsinformationen an das Computersystem übermittelt oder das mobile Endgerät anhand von Geokoordinaten von Basisstationen lokalisiert wird, die dann übertragen werden.

3. Verfahren nach einem oder mehreren der vorhergehenden Ansprüche, **dadurch gekennzeichnet, dass** anhand der gesammelten und gespeicherten Informationen aus der Vergangenheit statistische Berechnungen vorgenommen werden, um frühzeitig zu erkennen, welche Strecke gewählt werden wird, wobei auf dieser Grundlage ebenfalls der Zeitraum zwischen den Lokalisierungsintervallen bestimmt werden kann.

4. Verfahren nach einem oder mehreren der vorhergehenden Ansprüche, **dadurch gekennzeichnet, dass** als Prozesse das Auslösen von Anrufen, MMS, SMS, E-Mails, das Starten von benutzerdefinierten und eingebundenen Programmen definiert werden, wobei Informationen, wie analysierte Produktinformationen, die in Streckennähe angeboten werden, Wegoptimierungen und/oder Staumeldungen übertragen werden können.

5. Verfahren nach dem vorhergehenden Anspruch, **dadurch gekennzeichnet, dass** ein Klimasystem am Zielort und/oder am Startort gesteuert wird und/oder ein Telefonsystem, insbesondere Rufumleitungen und/oder Anrufbeantworter, gesteuert werden und/oder ein Haussicherheitssystem gesteuert wird.

6. Verfahren nach einem oder mehreren der vorhergehenden Ansprüche, **dadurch gekennzeichnet, dass** die Streckeninformationen manuell eingegeben werden oder automatisch während der Bewegung des Benutzers aufgezeichnet werden, wobei der Benutzer die automatische Aufzeichnung des Lokalisierungsprozesses durchsteuern kann.

7. Verfahren nach einem oder mehreren der vorhergehenden Ansprüche, **dadurch gekennzeichnet, dass** Benutzereingaben für Ereignisse und/oder der Lokalisierungssteuerung und/oder der Streckeninformation über ein Web/WAP-Interface gesteuert werden.

8. Verfahren nach einem oder mehreren der vorhergehenden Ansprüche, **dadurch gekennzeichnet, dass** die mobile Telefonnummer als ID für die Benutzerinformationen verwendet wird, wodurch eine digitale Datenverwaltung ermöglicht wird.

9. Verfahren nach einem oder mehreren der vorhergehenden Ansprüche, **dadurch gekennzeichnet, dass** bei der Speicherung von geographischen Zwischenpunkten ein Lokalisierungsintervall manuell oder automatisch festlegbar ist, wobei Endpunkte dann vorliegen, wenn eine bestimmte Zeit von geographischer Inaktivität überschritten wurde.

10. Software für ein Computersystem, **dadurch gekennzeichnet, dass** ein Verfahren nach einem oder mehreren der vorhergehenden Ansprüche implementiert ist.

11. Datenträger für ein Computersystem, **gekennzeichnet durch** die Speicherung einer Software nach dem vorhergehenden Softwareanspruch.

12. Computersystem, **gekennzeichnet durch** eine Einrichtung, die den Ablauf eines Verfahrens nach einem oder mehreren der vorhergehenden Verfahrensansprüche erlaubt.

## Claims

1. A Method for controlling of digitally storable processes on the basis of events that are started on over the Internet accessible stationary computer systems based on movement information, wherein the movement information of the user Is determined by a mobile device, and is transmitted to the server computer system ,
- with a learning step in which user-specific digital route information is recorded by the server computer system, wherein the starting point and the endpoint are stored and wherein also the times and a number of intermediate points, which are determined by a localization interval, are stored digitally,
- with an additional configuration step in which one or more user-related events are associated with route information, which determine the digitally controlled processes, wherein the processes from the user on the server computer system are defined by deposited individual programs;
- with a further control step in which based on the early route information It Is determined which route is driven on, to then determine the digitally stored event and start the digital processes on the server computer system;

2. Method according to the preceding claim, **characterized by** that the mobile device transmits location Information to the computer system using GPS or the mobile device Is located using geo- coordinates of base stations, which will be transmitted.

3. Method according to one or more of the preceding claims, **characterized by** that based on the collected and stored information from the past statistical calculations are performed, to early identify which route will be chosen, wherein on this basis also the time period between the localization intervals can be determined.

4. Method according to one or more of the preceding claims, **characterized by** that as processes triggers calls, MMS, SMS, e-mails, are used to start user-defined and Integrated programs, wherein information, such as analyzed information on products which are offered in close distance to the route, route optimization and I or traffic reports can be transmitted.

5. Method according to the preceding claim, **characterized by** that an air conditioning system at the destination and I or at the starting point will be controlled and I or a telephone system, especially a caller redirection and/or answering machine, and I or a home security system.

6. Method according to one or more of the preceding claims, **characterized by** that the route information Is entered manually or recorded automatically during the movement of the user, wherein the user can control the automatic recording of the localization process.

7. Method according to one or more of the preceding claims, **characterized by** that user Input for events and l or localization control and I or route information can be controlled through a Web I WAP interface.

8. Method according to one or more of the preceding claims, **characterized by** that the mobile phone number is used as an identifier for the user information, which allows a digital data management.

9. Method according to one or more of the preceding claims, **characterized by** that the storage of geographic points between a localization interval Is definable or automatically determined, wherein an endpoint has been reached, if a certain interval of geographic inactivity has been exceeded.

10. Software for a computer system, **characterized by** a method which is implemented by one or more of the preceding claims.

11. Disc for a computer system, **characterized by** storing software according to the preceding software claim.

12. Computer system, **characterized by** a device that allows the execution of a method according to one or more of the preceding method claims.

## Revendications

1. Méthode de commande de procédés pouvant être chargés en mémoire numérique, sur la base d'événements déclenchés sur des ordinateurs fixes accessibles depuis le réseau Internet, sur la base d'information de déplacement, dans laquelle l'information de déplacement d'un utilisateur est déterminée au moyen d'un dispositif mobile, et transmis vers un ordinateur serveur;
- avec une étape d'apprentissage dans laquelle est transmise à l'ordinateur serveur une information numérique d'un trajet propre à l'utilisateur; dans laquelle sont stockés en mémoire numérique les points de départ et de destination ainsi que des durées et un nombre de points intermédiaires déterminés par géo localisation;
- avec une étape de configuration supplémentaire au cours de laquelle un ou plusieurs événements spécifiques à l'utilisateur sont associées à l'information de trajet, laquelle détermine les procédés commandés de manière numérique, dans laquelle sont définis au moyen de programmes individuels stockés les procédés de l'utilisateur vers l'ordinateur serveur;
- avec une étape de commande supplémentaire dans laquelle est déterminé le trajet en cours sur la base d'une information relative à un trajet antérieur, afin de déterminer l'événement stocké de manière numérique et d'engager les procédés numériques sur l'ordinateur serveur.

2. La méthode selon la revendication précédente, dans laquelle le dispositif mobile transmet une information de géo localisation basée sur le GPS ou dans laquelle le dispositif mobile est localisé au moyen de coordonnées géographiques de stations de base, ultérieurement transmises.

3. La méthode selon l'une quelconque des revendications précédentes, dans laquelle le trajet est déterminé de manière précoce sur la base d'informations collectées et
stockées en mémoire concernant les calculs statistiques antérieurs, dans laquelle peut également être déterminés les intervalles de localisation.

4. La méthode selon l'une quelconque des revendications précédentes, **caractérisée par** l'utilisation de MMS, SMS ou de courriels pour le lancement de procédés dans le but de lancer des programmes intégrés ou spécifiques à l'utilisateur, dans laquelle est transmise une information telle qu'une information résultant d'analyses sur les produits offerts à la vente à proximité du trajet, ou une information d'optimisation de trajet et/ou des comptes-rendus de trajets.

5. La méthode selon la revendication précédente, pour la commande d'un système de climatisation à destination du trajet et/ou au point de départ du trajet et/ou un système téléphonique en particulier un dispositif de suivi d'appel et/ou un système de sécurité à domicile.

6. La méthode selon l'une quelconque des revendications précédentes, **caractérisée en ce que** l'information relative au trajet est saisie de manière manuelle ou enregistrée automatiquement durant le déplacement de l'utilisateur, dans laquelle l'utilisateur peut commander l'enregistrement automatique du procédé de localisation.

7. La méthode selon l'une quelconque des revendications précédentes, dans laquelle sont commandés au travers une interface Web/Wap les informations saisies par l'utilisateur pour les événements et/ou la commande de la localisation et/ou l'information relative au trajet.

8. La méthode selon l'une quelconque des revendications précédentes, **caractérisée en ce que** le numéro de téléphone mobile est utilisé pour servir d'identifiant, dans le but de permettre une gestion de données numériques.

9. La méthode selon l'une quelconque des revendications précédentes, **caractérisée en ce que** le stockage en mémoire des points géographiques entre les intervalles de localisation est défini ou déterminé de manière automatique, dans laquelle un point final est atteint dès lors qu'est dépassée une durée prédéterminée d'immobilisation géographique.

10. Programme d'ordinateur pour un ordinateur, **caractérisé par** une méthode implémentée conformément à l'une quelconque des revendications précédentes.

11. Support disque pour ordinateur, caractérisé pour le support d'un programme d'ordinateur conforme à la revendication de programme d'ordinateur.

12. Ordinateur, **caractérisé par** un dispositif permettant l'exécution d'une méthode conformément à une ou plusieurs des revendications de méthode.
